# EUROPÄISCHE PATENTSCHRIFT

(11) **EP 3 018 446 B1**
(45) Veröffentlichungstag und Bekanntmachung des Hinweises auf die Patenterteilung: **29.12.2021**
(21) Anmeldenummer: 14192130.4
(22) Anmeldetag: 06.11.2014
(51) Int. Cl.: G01B 11/25, G07G 1/00, G01B 11/24

(54) **IDENTIFIZIERUNGSVORRICHTUNG FÜR EIN OBJEKT**
IDENTIFICATION DEVICE FOR AN OBJECT
DISPOSITIF D'IDENTIFICATION D'OBJETS

(43) Veröffentlichungstag der Anmeldung: 11.05.2016
(73) Patentinhaber: Wincor Nixdorf International GmbH, 33106 Paderborn (DE)
(72) Erfinder: Fedorenko, Sergej, 194355 St. Petersburg (RU); Baitz, Günter, 13629 Berlin (DE); Schäfer, Oliver, 10369 Berlin (DE)

(56) Entgegenhaltungen:
- WO-A1-2010/099036
- WO-A1-2013/134865
- US-A1- 2002 057 438
- US-A1- 2010 217 678
- US-A1- 2014 052 555
- None

## Beschreibung

Die Erfindung betrifft eine Identifizierungsvorrichtung für ein Objekt.

Die Identifizierung eines Objektes spielt beispielsweise bei der Warenerkennung im Kassenbereich eines Supermarktes oder anderen Verkaufsgeschäftes eine wichtige Rolle. Grundsätzlich ist es hierzu bekannt, auf der Ware einen Barcode anzuordnen, der die Ware identifiziert. Durch Lesen des Barcodes mittels eines Barcode-Lesegerätes kann die Ware in einfacher Weise identifiziert werden.

Probleme bei der Erfassung des Barcodes können jedoch auftreten, wenn die Ware vollständig automatisiert und ohne die Hilfe einer Bedienperson identifiziert werden soll. Beispielsweise können die Fälle eintreten, dass der Barcode einer Ware durch eine andere Ware verdeckt ist, dass die Ware derart platziert ist, dass der mit einem Barcode versehene Bereich von einem Barcode-Lesegerät nicht erfasst wird oder dass der Barcode beispielsweise aufgrund von Reflektionen nicht korrekt gelesen wird.

In solchen Fällen, in denen eine Barcodeerkennung nicht gelingt, ist es erforderlich, ein Objekt mittels zusätzlicher Informationen zu identifizieren. Gleiches gilt für Objekte, die von vornherein keinen Barcode besitzen (wie zum Beispiel loses Obst).

Ferner sind für bestimmte Objekte zum Zwecke einer Manipulationserkennung (wie beispielsweise eine vorsätzliche Um-Etikettierung eines Supermarktartikels oder die Fälschung eines Pfandrücknahmeartikels) zusätzliche Gültigkeitsprüfungen nötig, für die es gilt, definierte sichtbare bzw. nicht sichtbare Identifizierungsmittel oder Kennzeichen (beispielsweise Wasserzeichen) eindeutig zu erkennen.

Die US 2002/057438 A1 offenbart eine Identifizierungsvorrichtung für ein Objekt, welche eine erste und zweite Beleuchtungseinrichtung, eine Farbkamera und ein Identifizierungsmittel aufweist.

Die US 2014/052555 A1 beschreibt eine Vorrichtung zur Erkennung von Waren. Vorgestellt wird dort zu einem die Nutzung einer ersten Beleuchtungseinrichtung, die dazu ausgebildet ist, ein zu identifizierendes Objekt mit Licht des sichtbaren Spektrums und/oder mit Infrarot-Licht zu beleuchten, wobei die erste Beleuchtungseinrichtung LED-Leuchtmittel mit den Farben rot, grün, blau und/oder infrarot umfasst und Licht mit einem Rotanteil, einem Grünanteil und einem Blauanteil und/oder Licht mit einem Infrarotanteil bereitstellt. Zum anderen stellt diese Veröffentlichung eine zweite Beleuchtungseinrichtung vor, die dazu ausgebildet ist, das zu identifizierende Objekt mit einem strukturierten Beleuchtungsmuster zu beleuchten.

Die WO 2013/134865 A1 beschreibt die Nutzung von digitalen Bildverarbeitungsmitteln zum Identifizieren einer Ware, von der mittels einer Farbkamera ein Bild aufgenommen worden ist.

Gemäß der Lehre der US 2010/217678 A1 werden Waren identifiziert, indem sie mittels visueller Sensoren bildmäßig erfasst werden. Die erfassten Bilder werden mit Daten einer Datenbank verglichen. Die Daten der Datenbank geben sog. visuelle Modelle an, die zum einen ein Bild der jeweiligen Ware beinhalten und zum anderen geometrische Punktmerkmale.

Der vorliegenden Erfindung liegt die Aufgabe zugrunde, eine Identifizierungsvorrichtung für ein Objekt bereitzustellen, die eine Objekterkennung und/oder eine Gültigkeitsprüfung ermöglicht, die nicht notwendigerweise auf einer Barcodeerfassung beruht.

Diese Aufgabe wird erfindungsgemäß durch eine Identifizierungsvorrichtung mit den Merkmalen des Anspruchs 1 gelöst. Ausgestaltungen der Erfindung sind in den Unteransprüchen angegeben.

Danach sieht die erfindungsgemäße Lösung eine Identifizierungsvorrichtung vor, die eine erste und eine zweite Beleuchtungseinrichtung aufweist. Die erste Beleuchtungseinrichtung ist dazu ausgebildet, ein zu identifizierendes Objekt mit Licht des sichtbaren Spektrums und/oder mit Infrarot-Licht homogen zu beleuchten. Die zweite Beleuchtungseinrichtung ist dazu ausgebildet, das zu identifizierende Objekt mit einem strukturierten Beleuchtungsmuster zu beleuchten. Ein strukturiertes Beleuchtungsmuster ist beispielsweise ein Beleuchtungsmuster, das eine Vielzahl von Gitterpunkten aufweist, wobei die Gitterpunkte eine räumliche Modulation aufweisen können.

Die Identifizierungsvorrichtung umfasst des Weiteren eine Farbkamera, die das mit der ersten Beleuchtungseinrichtung und mit der zweiten Beleuchtungseinrichtung beleuchtete Objekt aufnimmt. Dabei besteht zwischen der Beleuchtungsrichtung der zweiten Beleuchtungseinrichtung, die das strukturierte Beleuchtungsmuster bereitstellt, und der optischen Achse der Farbkamera ein spitzer Winkel. Dies ist erforderlich, um Messprinzipien der Triangulation einzusetzen.

Es ist weiter vorgesehen, dass die mindestens eine Farbkamera erste Daten bereitstellt, die das Bild des mit der ersten Beleuchtungseinrichtung beleuchteten Objekts betreffen und zweite Daten bereitstellt, die das Bild des mit der zweiten Beleuchtungseinrichtung beleuchteten Objekts betreffen. Die ersten Daten können dabei unter anderem dahingehend ausgewertet werden, dass die Farbe und/oder Kontrastverhältnisse des Objektes bei unterschiedlichen Beleuchtungsszenen erfasst werden. Die zweiten Daten können dahingehend ausgewertet werden, dass die dreidimensionale Form des Objektes erkannt wird. Letzteres kann beispielsweise gemäß einem Verfahren erfolgen, wie es in der WO 2012/048889 A1 oder in der europäischen Patentanmeldung Nr. 14 170 301.7 "Verfahren und Vorrichtung zur Erfassung der dreidimensionalen Form eines Objektes" vom 28.05.2014 der Anmelderin beschrieben ist.

Die vorliegende Erfindung beruht somit auf der Idee, in einer Identifizierungsvorrichtung für ein Objekt Mittel bereitzustellen, die sowohl die Erfassung der dreidimensionalen Form eines Objektes (d.h. von Formmerkmalen) als auch die Erfassung der Farbe eines Objektes (d.h. von Farbmerkmalen) ermöglichen. Zusätzlich oder alternativ zur Erfassung der Farbe können mittels einer Beleuchtung mit Infrarot-Licht Kontrastverhältnisse (aus denselben oder aus abwechselnden Beleuchtungsszenen) erfasst werden. Mit der gleichzeitigen Erfassung von Farbmerkmalen und von Formmerkmalen ist es möglich, ein Objekt in Echtzeit auch ohne Barcodeerkennung eindeutig zu Identifizieren. Dies ist beispielsweise bei Objekten im Kassenbereich eines Supermarktes sowie im Pfandrücknahmebereich ("Reverse Vending Machines") von großer Bedeutung. In einem Supermarkt sind die einzelnen Objekte bzw. Waren so gestaltet, dass der Mensch sie gut unterscheiden kann, beispielsweise durch eine werbewirksame Gestaltung mit Form und Farbe.

Die erfindungsgemäße Erfassung von Farbmerkmalen und von Formmerkmalen schließt natürlich nicht aus, dass mittels der Identifizierungsvorrichtung weitere Identifizierungsinformationen erfasst werden, beispielsweise ein Barcode, Etiketten, Logos, Marken und Unternehmenskennzeichen, die insbesondere aus den Daten, die das Bild des mit der ersten Beleuchtungseinrichtung beleuchteten Objekts betreffen, analysiert werden.

Ein weiterer Vorteil der vorliegenden Erfindung besteht darin, dass durch gleichzeitiges Beleuchten des zu identifizierenden Objektes durch das Licht der ersten Beleuchtungseinrichtung und das Licht der zweiten Beleuchtungseinrichtung die Daten, die die Farbkamera zu den jeweiligen Bildern bereitstellt, automatisch korreliert sind, so dass auch die daraus abgeleiteten 3D-Daten und Farbdaten automatisch korreliert sind. Das zu identifizierende Objekt kann grundsätzlich ortsfest angeordnet sein oder sich bewegen. Sofern das zu identifizierende Objekt bewegt ist (z.B. weil es sich auf einem Transportband befindet und mit definierter Geschwindigkeit transportiert wird), ergibt sich die Korrelation unter Berücksichtigung der Bewegungsrichtung- und geschwindigkeit des Objekts (z.B. der Transportgeschwindigkeit eines Transportbandes). Die Bilder des bewegten Objektes, die durch die erste Beleuchtungseinrichtung und durch die zweite Beleuchtungseinrichtung aufgenommen wurden, können dabei über eine Verschiebung der beiden aufgenommenen Bilder entsprechend der Bewegungsrichtung- und geschwindigkeit des Objekts miteinander korreliert werden, so dass das Farb- und 3D-Bild kongruent erfasst werden können.

Für eine solche Korrelation wird beispielsweise ein Verschiebungsvektor zwischen den beiden Aufnahmen ermittelt. Für den Fall des Transport des Objektes auf einem Transportband ist entweder die Bandgeschwindigkeit mit hinreichender Genauigkeit vorbekannt oder sie kann z.B. durch eine Korrelatorspur am Rand des Transportbandes (hierzu wird z.B. die natürliche Textur des Transportbandes oder künstliche Marker verwendet) berechnet werden.

Eine Korrelation ist ebenso realisierbar im Falle einer unerwarteten Objektgeschwindigkeit oder eines ungleichförmigen Bewegungsablauf, beispielsweise verursacht durch Rollen, Anstoßen, Umstürzen des Objektes oder durch das bewusste oder unbewusste Einwirken einer Person durch Festhalten, Wackeln, Rückziehen oder Durchwerfen), sofern genügend charakteristische Merkmale für eine eindeutige Bestimmung des Bildausschnitts verfügbar sind.

Erfindungsgemäß ist vorgesehen, dass die erste Beleuchtungseinrichtung Licht mit einem Rotanteil, einem Grünanteil und einem Blauanteil bereitstellt. Zusätzlich oder alternativ stellt die Beleuchtungseinrichtung auch Infrarot-Licht bereit. Dies erfolgt beispielsweise über LED-Leuchtmittel mit den Farben Rot, Grün, Blau und/oder Infrarot-LEDs, die jeweils ein oder mehrere LEDs umfassen können. Der auf diese Weise bereitgestellte RGB-Farbraum und gegebenenfalls Infrarotraum ermöglicht eine Farbaufnahme über einen in der Farbkamera enthaltenen Farbsensor.

Eine weitere vorteilhafte Ausgestaltung der Erfindung sieht vor, dass die zweite Beleuchtungseinrichtung ein Beleuchtungsmuster aus grünem Licht aussendet. Beispielsweise erzeugt die zweite Beleuchtungseinrichtung auf der Oberfläche des zu erkennenden Objektes eine Wolke von Objektgitterpunkten aus grünem Licht. Die Verwendung von grünem Licht für die zweite Beleuchtungseinrichtung ist mit dem Vorteil verbunden, dass eine gute Detektion der Objektgitterpunkte durch die Farbkamera möglich ist, insbesondere bei Verwendung einer ersten Beleuchtungseinrichtung, die einen RGB-Farbraum zum homogenen Beleuchten des Objektes bereitstellt.

Der von der Farbkamera wahrnehmbare Infrarot-Anteil kann zur Kontrast- bzw. Grauwertanalyse parallel bzw. in einer weiteren Beleuchtungsszene derselben Beleuchtungseinrichtung herangezogen werden.

Eine weitere Ausgestaltung der Erfindung sieht vor, dass die erste Beleuchtungseinrichtung und die zweite Beleuchtungseinrichtung derart gesteuert sind, dass sie ein zu identifizierendes Objekt sequenziell mit Licht beleuchten. In einander abwechselnden Zeitintervallen beleuchtet somit die erste Beleuchtungseinrichtung und die zweite Beleuchtungseinrichtung jeweils das zu identifizierende Objekt. Dementsprechend nimmt die Farbkamera sequentiell Bilder auf, die nur das mit der ersten Beleuchtungseinrichtung beleuchtete Objekt oder nur das mit der zweiten Beleuchtungseinrichtung beleuchtete Objekt betreffen. Die beiden dabei entstehenden Datenströme betreffend das mit der ersten Beleuchtungseinrichtung beleuchtete Objekt und betreffend das mit der zweiten Beleuchtungseinrichtung beleuchtete Objekt können voneinander getrennt und unabhängig voneinander verarbeitet werden. Dabei kann vorgesehen sein, dass die von der Farbkamera bereitgestellten Daten eine Vorverarbeitung und Datenreduzierung erfahren, bevor die Datenströme betreffend das Bild der ersten Beleuchtungseinrichtung und betreffend das Bild der zweiten Beleuchtungseinrichtung voneinander getrennt werden.

Durch ein sequenzielles Beleuchten des zu identifizierenden Objektes mit der ersten Beleuchtungseinrichtung und der zweiten Beleuchtungseinrichtung wird erreicht, dass in einem betrachteten Zeitintervall das Objekt nur mit Licht einer der beiden Beleuchtungseinrichtungen bestrahlt ist und dementsprechend die Farbkamera während dieses Intervalls nur das mit einer der Beleuchtungseinrichtungen erzeugte Bild aufnimmt. Dies erlaubt es die Informationen, die auf die erste Beleuchtungseinrichtung und die auf die zweite Beleuchtungseinrichtung zurückzuführen sind, in einfacher Weise zu trennen, gesondert zu verarbeiten und bei bestimmten Anwendungen anschließend wieder zusammenzuführen.

Um zu erreichen, dass die Farbkamera sequentiell Bilder aufnimmt, die nur das mit der ersten Beleuchtungseinrichtung beleuchtete Objekt oder nur das mit der zweiten Beleuchtungseinrichtung beleuchtete Objekt betreffen, sind jedoch auch andere Maßnahmen möglich. Beispielsweise kann vorgesehen sein, dass die erste und die zweite Beleuchtungseinrichtung kontinuierlich Licht abgeben und Filter vorgesehen sind, die abwechselnd geschaltet werden und abwechselnd das Licht der ersten Beleuchtungseinrichtung und das Licht der zweiten Beleuchtungseinrichtung zur Farbkamera durchlassen.

Weiter kann vorgesehen sein, dass die Farbkamera dazu ausgebildet ist, von einem Objekt mindestens zwei Aufnahmen zu machen, während es innerhalb einer Sequenz mit der ersten Beleuchtungseinrichtung beleuchtet wird. Eine solche doppelte oder mehrfache Aufnahme des Objektes kurz hintereinander ermöglicht es, bei der ersten Aufnahme aufgetretene Fehler zu korrigieren. Wenn beispielsweise die erste Aufnahme spiegelnde Reflektionen aufweist, die es unmöglich machen, beispielsweise einen Barcode oder ein Label, das in dem spiegelnden Bereich angeordnet ist, zu erkennen, so wird dieses Artefakt bei der zweiten Aufnahme, nachdem das Objekt beispielsweise auf einem Transportband befördert und damit seine Position verändert hat, nicht mehr auftreten. Die gewonnenen Bilder können nach Herausrechnen des Versatzes durch die Transportbewegung in geeigneter Weise zusammengeführt (z.B. addiert oder gemittelt) werden.

Ebenso könnte diese Methode einer doppelten oder mehrfachen Aufnahme des Objektes kurz hintereinander für eine abwechselnde Beleuchtungsszene zwischen sichtbarem Licht und nicht sichtbarem Licht der ersten Beleuchtungseinrichtung verwendet werden. Die zusammengeführten Bilder werden dann mit dem Bild aus der zweiten Beleuchtungseinrichtung korreliert. Bei dieser Variante ist die Farbkamera somit dazu ausgebildet ist, von einem Objekt mindestens zwei Aufnahmen zu machen, während es innerhalb einer Sequenz von der ersten Beleuchtungseinrichtung mit unterschiedlichen Lichtzusammensetzungen (z.B. abwechselnd sichtbares Licht und Infrarot-Licht) beleuchtet wird.

Eine weitere Ausgestaltung der Erfindung sieht vor, dass die mindestens eine Farbkamera ein Objektiv mit einem telezentrischen Strahlengang aufweist. Ein solcher telezentrischer Strahlengang zeichnet sich dadurch aus, dass die Strahlen parallel zur optischen Achse verlaufen. Der Vorteil besteht darin, dass ein konstanter Abbildungsmaßstab bereitgestellt wird, da eine Translationsinvarianz vorliegt. Dies vereinfacht die Klassifikation des Objektes, da ein Freiheitsgrad weniger zu berücksichtigen ist. Da ein telezentrischer Strahlengang einen relativ kleinen Bildausschnitt erfasst, kann vorgesehen sein, dass eine Mehrzahl von Farbkameras mit jeweils einem telezentrischen Strahlengang nebeneinander angeordnet sind, die jeweils einen Teilausschnitt des aufzunehmenden Bildes erfassen, wobei die Teilausschnitte später zusammengesetzt werden.

Erfindungsgemäß weist die Vorrichtung des Weiteren Identifizierungsmittel auf, die dazu ausgebildet sind, die ersten Daten dahingehend auszuwerten, dass eine Mustererkennung und/oder eine Farberkennung zumindest eines Teilbereichs des Objekts erfolgt oder vorbereitet wird, und die zweiten Daten dahingehend auszuwerten, das mindestens ein Parameter der dreidimensionalen Form des Objekts erfasst oder dessen Erfassung vorbereitet wird. Insbesondere kann vorgesehen sein, dass die Identifizierungsmittel dazu ausgebildet sind, aus den ersten Daten einen auf dem Objekt angeordneten Barcode zu erkennen oder dessen Erkennung vorzubereiten. Andere Beispiele für eine Mustererkennung sind die Erkennung eines Etiketts, eines Logos oder eine Schrifterkennung (beispielsweise zur Erkennung einer Marke oder eines Unternehmenskennzeichens). Gültigkeitsprüfungen von beispielsweise verborgenen Wasserzeichen können über die Messung von Kontrastunterschieden in gleichen oder abwechselnden Beleuchtungsszenen unterschiedlicher Lichtspektren durchgeführt werden.

Weiter sind die Identifizierungsmittel beispielsweise dazu ausgebildet, die zweiten Daten mittels Prinzipien der Epipolargeometrie und der Korrespondenzanalyse im Hinblick auf mindestens einen Parameter der dreidimensionalen Form auszuwerten. Dieser Parameter ist beispielsweise der Abstand der einzelnen Objektgitterpunkte von einer Referenzfläche, beispielsweise der Ebene eines Transportbandes. Mittels der Korrespondenzanalyse werden Objektgitterpunkte auf der Oberfläche des Objektes, die durch das strukturierte Beleuchtungsmuster bereitgestellt sind, Bildgitterpunkten in der Bildebene der Farbkamera zugeordnet, wobei die Bildgitterpunkte durch die Aufnahme des durch das strukturierte Beleuchtungsmuster beleuchteten Objekts mit der Farbkamera entstehen.

Die Erfindung sieht vor, dass die Vorrichtung, beispielsweise die genannten Identifizierungsmittel dazu ausgebildet sind, zu einem zu identifizierenden Objekt erste Daten (betreffend das mittels der ersten Beleuchtungseinrichtung aufgenommene Bild) und zweite Daten (betreffend das mittels der zweiten Beleuchtungseinrichtung aufgenommene Bild) sequentiell zu erfassen, aus den ersten Daten gewonnene Farbdaten und aus den zweiten Daten gewonnene 3D-Daten zu dem Objekt miteinander zu korrelieren und auf der Grundlage dieser Korrelation die Farbdaten in ein kartesisches Koordinatensystem, insbesondere in ein kartesisches Weltkoordinatensystem zu übertragen. Dabei ist in einer Ausgestaltung vorgesehen, dass zu einem zu identifizierenden Objekt zuerst die zweiten Daten betreffend Formmerkmale (3D-Informationen) und anschließend die ersten Daten betreffend Farbmerkmale erfasst werden.

Das Objekt kann dabei ortsfest oder bewegt sein. Im zweiten Fall muss die Vorrichtung dazu ausgebildet sein, eine Korrelation der ersten Daten und der zweiten Daten unter Berücksichtigung der Bewegungsrichtung und -geschwindigkeit des bewegten Objektes vorzunehmen.

Diese Ausgestaltung der Erfindung ermöglicht es, das Objekt dreidimensional im Hinblick auf seine Farbgebung zu erfassen. Dies ermöglicht es beispielsweise, in einer Datenbank hinterlegte Informationen zur räumlichen Verteilung von Farbmerkmalen von Objekten bei der Identifizierung eines Objektes einzusetzen.

Ein weiterer Vorteil dieser Ausgestaltung ergibt sich in dem Fall, dass der zu erfassende Raumbereich, in dem sich das zu identifizierende Objekt befindet, durch mehrere Farbkameras erfasst wird, die jeweils einen Teilausschnitt eines aufzunehmenden Bildes erfassen. Dies kann vorteilhaft sein, um zur Realisierung der erforderlichen Augensicherheit Beleuchtungseinrichtungen mit geringer Beleuchtungstärke einsetzen zu können, die aufgrund ihrer geringen Beleuchtungsstärke jeweils nur ein kleines Raumvolumen beleuchten. In diesem Fall können die durch die einzelnen Farbkameras aufgenommenen und ausgewerteten Bilder leicht zu einem Gesamtbild zusammengefügt werden, da die durch die jeweilige Farbkamera und die nachfolgende Auswertung bereitgestellten Farbdaten in ein kartesisches Koordinatensystem übertragen wurden und daher unmittelbar zu dem Gesamtobjekt ergänzbar sind (sogenanntes "stitching").

Gemäß einer Ausgestaltung der Erfindung sind die erste Beleuchtungseinrichtung, die zweite Beleuchtungseinrichtung und die mindestens eine Farbkamera in einem gemeinsamen Modul mit einem Modulgehäuse angeordnet. Darüber hinaus können auch die genannten Identifizierungsmittel ebenfalls in das Modul integriert sein, wobei die Identifizierungsmittel in einem solchen Fall zumindest eine Datenreduktion vornehmen. Gemäß dieser Ausgestaltung wird somit ein kompaktes Modul bereitgestellt, das miteinander korrelierte Farbdaten und Daten zur dreidimensionalen Form des Objektes generiert, die im Modul selbst und/oder einer nachgeschalteten Einheit verarbeitet werden. Eine oder mehrere solche Module können beispielsweise dazu eingesetzt werden, als Objekte Waren zu erkennen, die auf einer Transportvorrichtung im Kassenbereich eines Supermarktes oder eines anderen Verkaufsgeschäftes befördert werden. Eine andere Anwendung besteht darin, als Objekte zum Beispiel Münzen, Flaschen, Dosen, Batterien sowie weitere Materialien im Rücknahme- oder Sortierbereich zu erkennen.

Gemäß einer Ausgestaltung der Erfindung ist vorgesehen, dass die Vorrichtung mindestens eine Mehrzahl zusammengehöriger Farbkameras aufweist, wobei eine erste Farbkamera der Mehrzahl dazu ausgebildet ist, ein Objekt oder einen Teil eines Objekts in einem ersten Tiefenschärfenbereich scharf abzubilden und mindestens eine zweite Farbkamera der Mehrzahl dazu ausgebildet ist, ein Objekt oder einen Teil eines Objekts in mindestens einem weiteren Tiefenschärfenbereich scharf abzubilden, der sich an den ersten Tiefenschärfenbereich anschließt. Sofern die Mehrzahl zusammengehöriger Farbkameras z.B. aus einem Paar von Farbkameras besteht, so ist eine erste Farbkamera des Paars dazu ausgebildet, ein Objekt oder einen Teil eines Objekts in einem ersten Tiefenschärfenbereich scharf abzubilden und eine zweite Farbkamera des Paars dazu ausgebildet, ein Objekt oder einen Teil eines Objektes in einem zweiten Tiefenschärfenbereich scharf abzubilden, der sich an den ersten Tiefenschärfenbereich anschließt. Es werden somit mehrere Farbkameras mit Objektiven mit unterschiedlichen Tiefenschärfenbereichen eingesetzt. Dies ermöglicht es, auch ein Objekt mit großer dreidimensionaler Tiefe insgesamt abzubilden, ohne die Notwendigkeit, Beleuchtungseinrichtungen mit einer hohen Lichtleistung zu verwenden. Die mehreren Farbkameras bzw. deren Objektive sind dabei in einer Ausgestaltung zumindest näherungsweise parallel angeordnet, um Verzerrungen zwischen den beiden aufgenommenen Bildern zu vermeiden.

Gemäß einer weiteren Ausgestaltung der Erfindung umfasst die Vorrichtung zwei Paare von Farbkameras, die in ein gemeinsames Modul integriert sind, wobei jedes der Paare einen anderen Raumbereich erfasst und jede der Farbkameras eines Paars einen anderen Tiefenschärfenbereich erfasst.

Die Erfindung betrifft auch eine Scanvorrichtung zur Erfassung von Waren im Kassenbereich eines Supermarktes, wobei die Scanvorrichtung in Form eines Tunnels oder Tors ausgebildet ist, durch den/das Waren auf einer Transportvorrichtung befördert werden. Die Scanvorrichtung umfasst dabei mindestens eine Vorrichtung mit den Merkmalen des Anspruchs 1. Darüber hinaus kann die Scanvorrichtung auch in anderer Weise ausgestaltete Scanvorrichtungen aufweisen, beispielsweise einen so genannten Bottom-Scanner, der eine Ware von der Unterseite her scannt und/oder einen seitlichen Scanner, der ein seitliches Bild der Ware erfasst. Die erfindungsgemäße Identifizierungsvorrichtung ist bevorzugt derart angeordnet, dass sie von oben in der Draufsicht das zu identifizierende Objekt erfasst.

Die Erfindung wird nachfolgend unter Bezugnahme auf die Figuren der Zeichnung anhand mehrerer Ausführungsbeispiele näher erläutert. Es zeigen:
- Figur 1: schematisch eine Identifizierungsvorrichtung für ein Objekt, die eine erste Beleuchtungseinrichtung, eine zweite Beleuchtungseinrichtung und eine Farbkamera umfasst;
- Figur 2: eine teilweise gebrochene Ansicht eines Ausführungsbeispiels einer als Modul ausgebildeten Identifizierungsvorrichtung;
- Figur 3: ein Ausführungsbeispiel einer zweiten Beleuchtungseinrichtung, die ein strukturiertes Beleuchtungsmuster bereitstellt;
- Figur 4: schematisch eine Scanvorrichtung zur Erfassung von Waren im Kassenbereich eines Supermarktes mit mindestens einem Modul gemäß der Figur 2;
- Figur 5: ein schematisches Beispiel von 3D-Daten und zugehörigen Farbdaten zu einem zu identifizierenden Objekt, das auf einem Transportband befördert wird;
- Figur 6a: ein Beispiel für die Erfassung von 3D-Daten;
- Figur 6b: ein Beispiel für die Erfassung von Farbdaten; und
- Figur 6c: ein Beispiel für eine Identifizierung und Segmentierung benachbarter Objekte unter Verwendung der 3D-Daten und der Farbdaten der Figuren 6a, 6b.

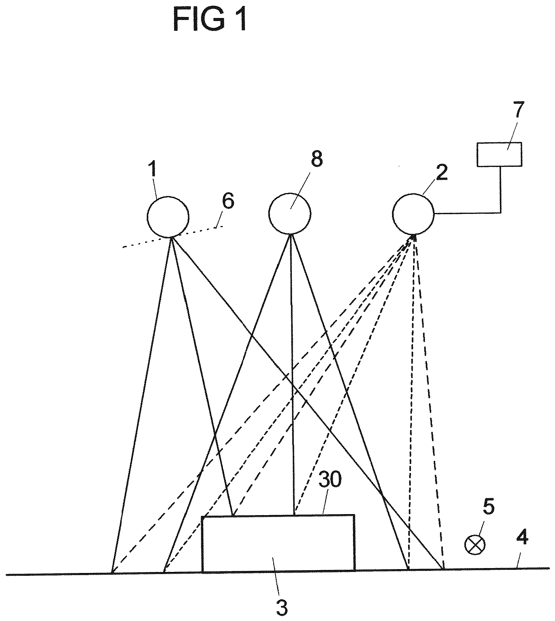

Die Figur 1 zeigt schematisch eine Identifizierungsvorrichtung für ein Objekt. Die Identifizierungsvorrichtung umfasst eine erste Beleuchtungseinrichtung 8, eine zweite Beleuchtungseinrichtung 1 und eine Farbkamera 2. Ein zu identifizierendes Objekt 3 befindet sich auf einer Referenzfläche 4, die im dargestellten Ausführungsbeispiel, jedoch nicht notwendigerweise, horizontal verläuft. Das Objekt 3 kann eine feste Position im Raum besitzen. Alternativ befindet sich das Objekt 3 auf einer Transportvorrichtung, die das Objekt 3 in einer Richtung 5 senkrecht zur Zeichenebene transportiert. Ein solches Transportmittel ist beispielsweise ein Förderband im Kassenbereich eines Supermarktes oder eines anderen Verkaufsgeschäftes. Alternativ kann auch vorgesehen sein, dass die Vorrichtung aus Beleuchtungseinrichtungen 1, 8 und Farbkamera 2 gegenüber einem feststehenden oder ebenfalls bewegten Objekt 3, zum Beispiel auf einem Industrieroboter, verfahren wird.

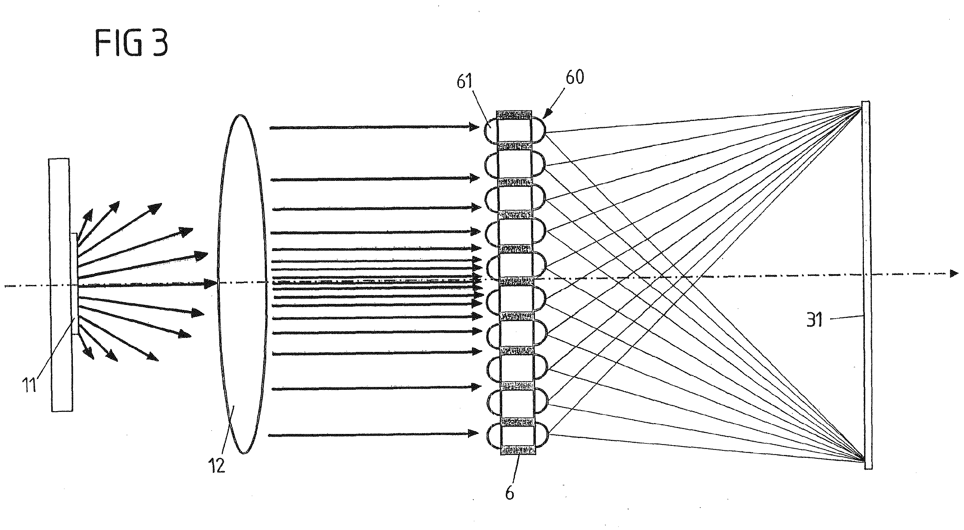

Die erste Beleuchtungseinrichtung 8 beleuchtet das zu identifizierende Objekt 3 homogen (d.h. ohne eine räumliche Strukturierung) mit Licht des sichtbaren Spektrums. Zusätzlich oder alternativ kann eine Beleuchtung mit Infrarot-Licht erfolgen. Es handelt sich beispielsweise um eine Lichtquelle, die LED-Leuchtmittel mit den Farben Rot, Grün und Blau umfasst und die ggf. eine weitere Lichtquelle für Infrarot umfasst (beispielsweise in Form von Infrarot-LEDs). Das Licht der zweiten Beleuchtungseinrichtung 1 bestrahlt eine Maske 6, die zusammen mit weiteren optischen Elementen (nicht dargestellt) ein Beleuchtungsmuster (ebenfalls nicht dargestellt) aus Objektgitterpunkten auf der Oberfläche 30 des Objektes 3 erzeugt. Ein Ausführungsbeispiel der Anordnung der zweiten Beleuchtungseinrichtung 1 und der Maske 6 wird anhand der Figur 3 erläutert werden.

Die von der zweiten Beleuchtungseinrichtung 1 und der Maske 6 bereitgestellten Lichtbündel erzeugen ein Beleuchtungsmuster, das eine Vielzahl von Gitterpunkten aufweist, wobei mindestens einige der Gitterpunkte auf die Oberfläche 30 des Objekts 3 projiziert und als Objektgitterpunkte mittels der Farbkamera 2 erfasst werden. Das von der zweiten Beleuchtungseinrichtung 1 ausgestrahlte Licht ist beispielsweise grünes Licht. Des Weiteren wird die Oberfläche 30 des Objekts 3 homogen mit dem Licht bestrahlt, das die erste Beleuchtungseinrichtung 8 aussendet. Auch das von der ersten Beleuchtungseinrichtung 8 auf die Oberfläche 30 des Objektes 3 projizierte und von der Oberfläche reflektierte Licht wird mittels der Farbkamera 2 erfasst. Diese Vorgänge sind in der Figur 1 durch die durchgezogenen Strahlen, die von der ersten bzw. zweiten Beleuchtungseinrichtung 8, 1 ausgehen, und die gestrichelten Strahlen, die die Farbkamera 2 detektiert, angedeutet.

Bei der Kamera 2 handelt es sich beispielsweise um eine Digitalkamera oder eine Videokamera, die einen zweidimensionalen CCD-Array-Sensor oder alternativ einen CMOS-Array-Sensor aufweist, der ein Digitalbild bereitstellt (auch als Matrixsensor-Kamera bezeichnet).

Die Kamera 2 weist dabei ein Objektiv auf, das das mit den Gitterpunkten der zweiten Beleuchtungseinrichtung 1 und dem homogenen Licht der ersten Beleuchtungseinrichtung 8 bestrahlte Objekt in die Bildebene der Kamera abbildet, in der sich der CCD- bzw. CMOS-Chip befindet.

Es wird darauf hingewiesen, dass zwischen der Beleuchtungsrichtung der zweiten Beleuchtungseinrichtung 1 und der Betrachtungsrichtung der Farbkamera 2 ein spitzer Winkel besteht. Die Beleuchtungsrichtung der zweiten Beleuchtungseinrichtung 1 ist dabei die Raumrichtung, die der Ausstrahlrichtung des Schwerpunkts der von der Beleuchtungseinrichtung 1 ausgehenden Lichtbündel entspricht. Die Betrachtungsrichtung der Farbkamera 2 wird durch die optische Achse der Farbkamera 2 definiert.

Die Farbkamera 2 stellt erste Daten bereit, die das Bild des mit der ersten Beleuchtungseinrichtung 8 beleuchteten Objekts betreffen und stellt zweite Daten bereit, das Bild des mit der zweiten Beleuchtungseinrichtung 1 beleuchteten Objekts betreffen. Dabei kann vorgesehen sein, dass die erste Beleuchtungseinrichtung 8 und die zweite Beleuchtungseinrichtung 1 derart gesteuert sind, dass sie ein zu identifizierendes Objekt sequenziell mit Licht beleuchten, so dass das Digitalbild der Kamera 2 sequenziell nur die Abbildung der Objektgitterpunkte des beleuchteten Objektes 3 oder die farbige oder/und ggf. grauwertige (letzteres im Falle der Beleuchtung mit Infrarot-Licht) homogene Abbildung des Objektes 3 aufweist. Die entsprechenden Daten können in getrennte Datenströme aufgeteilt werden.

Der Farbkamera 2 ist dabei eine Recheneinrichtung 7 zugeordnet, an die die von der Kamera 2 erfassten Digitalbilder übertragen werden. Die Recheneinrichtung 7 umfasst dabei Identifizierungsmittel, die dazu ausgebildet sind, die ersten Daten (betreffend das durch die erste Beleuchtungseinrichtung 8 erzeugte Bild) dahingehend auszuwerten, dass eine Mustererkennung und/oder eine Farberkennung zumindest eines Teilbereichs des Objektes 3 erfolgt oder vorbereitet wird, und die weiter dazu ausgebildet sind, die zweiten Daten (betreffend das durch die zweite Beleuchtungseinrichtung 1 bereitgestellte Bild) dahingehend auszuwerten, dass mindestens ein Parameter der dreidimensionalen Form des Objektes 3 erfasst oder dessen Erfassung vorbereitet wird.

Dabei kann vorgesehen sein, dass die Recheneinrichtung 7 einen FPGA-Prozessor und/oder einen Datenstromprozessor und/oder ein vergleichbares Bauelement mit programmierbarer Logik aufweist, das eine Berechnung von 3D-Koordinaten und Farbkoordinaten bzw. Grauwertkoordinaten (aus der Infrarot-Beleuchtung) in Echtzeit gewährleistet. Alternativ werden die digitalen Bilder in eine externe Vorrichtung übertragen und dort weitergehend ausgewertet.

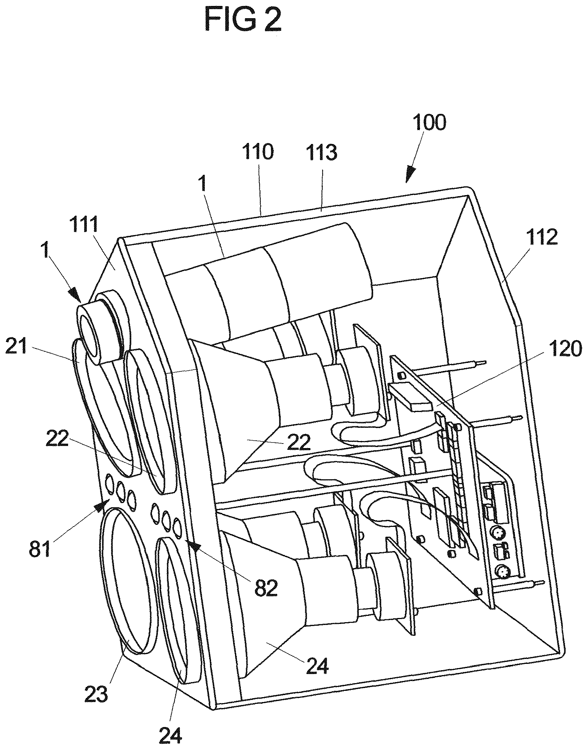

In der schematischen Darstellung der Figur 1 sind die erste Beleuchtungseinrichtung 8, die zweite Beleuchtungseinrichtung 1 und die Farbkamera 2 baulich getrennt. Alternativ kann vorgesehen sein, dass die beiden Beleuchtungseinrichtungen 8, 1 und die Farbkamera 2 in einem gemeinsamen Gehäuse angeordnet sind. Die Figur 2 zeigt ein Ausführungsbeispiel für eine solche gemeinsame Anordnung in einem Modul.

Die Figur 2 zeigt ein Ausführungsbeispiel eines Identifizierungsmoduls 100, das in einem Modulgehäuse 110 eine zweite Beleuchtungseinrichtung 1, zwei erste Beleuchtungseinrichtungen 81, 82 und vier Farbkameras 21-24 aufweist. Die Beleuchtungseinrichtungen 1, 81, 82 und die Farbkameras 21-24 sind mit einer Leiterplatte 120 verbunden, auf der elektronische Bauelemente angeordnet sind. Die Leiterplatte 120 ist in an sich bekannter Weise über elektrische und/oder optische Steckverbindungen mit externen Bauteilen wie z.B. einem Computer oder einem Computernetzwerk verbindbar.

Das Modulgehäuse 110 weist im dargestellten Ausführungsbeispiel eine Vorderseite 111 auf, die dem zu identifizierenden Objekt zugewandt ist und in der Licht aussendende oder Licht empfangende Komponenten der zweiten Beleuchtungseinrichtung 1, der ersten Beleuchtungseinrichtungen 81, 82 und der Farbkameras 21-24 angeordnet sind. Die Vorderseite 111 kann eben ausgebildet sein. Das Modulgehäuse 110 kann des Weiteren eine ebene Rückseite 112 und Seitenwände 113 aufweisen. Der genaue strukturelle Aufbau der Modulgehäuses 110 ist dabei für die vorliegende Erfindung nicht wesentlich. Es können auch andere Aufbauten als der in der Figur 2 dargestellte Aufbau vorgesehen sein.

Die zweite Beleuchtungseinrichtung 1 stellt ein strukturiertes Beleuchtungsmuster bereit. Zwischen ihrer Beleuchtungsrichtung und der optischen Achse der Farbkameras 21-24 besteht jeweils ein spitzer Winkel. Ein Ausführungsbeispiel der zweiten Beleuchtungseinrichtung 1 wird anhand der Figur 3 erläutert werden.

Die beiden ersten Beleuchtungseinrichtungen 81, 82 sind an der dem zu identifizierenden Objekt zugewandten Vorderseite 111 des Moduls 100 angeordnet. Sie weisen jeweils drei LEDs auf, die Licht in den Farben Rot, Grün und Blau abstrahlen. Zusätzlich kann eine Infrarot-LED vorgesehen sein (nicht dargestellt), die Infrarot-Licht abstrahlt. Anstelle einzelner Farb-LED's können dabei auch Mehrfarben-LED's mit separater Ansteuerung zum Einsatz kommen.

Die Farbkameras 21-24 sind als zwei Paare 21, 22 und 23, 24 angeordnet, wobei jedes der Paare 21, 22 und 23, 24 einen anderen Raumbereich erfasst. Insbesondere erfasst das obere Paar 21, 22 einen ersten Raumbereich. Die beiden Farbkameras 21, 22 des ersten Paars bilden dabei unterschiedliche Tiefenschärfenbereiche scharf ab, wobei diese beiden Tiefenschärfenbereiche aneinander anschließen, so dass über die beiden Farbkameras 21, 22 ein Objekt in einem insgesamt großen Tiefenschärfenbereich abgebildet werden kann.

In entsprechender Weise erfassen die beiden unteren Farbkameras 23, 24 einen anderen Raumbereich und es bildet wiederum jede dieser beiden Farbkameras 23, 24 ein Objekt in einem unterschiedlichen Tiefenschärfenbereich scharf ab, wobei sich die beiden Tiefenschärfenbereiche aneinander anschließen.

Die Farbkameras 21-24 weisen jeweils ein Objektiv mit einem telezentrischen Strahlengang auf.

Die Farbkameras 21-24 sind jeweils als CCD-Kamera oder CMOS-Kamera ausgebildet und umfassen einen Chip (z.B. einen zweidimensionalen CCD-Array-Sensor oder alternativ einen CMOS-Array-Sensor), der ein digitales Bild einer Aufnahme bereitstellt. Die digitalen Bilder werden an elektronische Vorverarbeitungsbausteine geleitet, die auf der Leiterplatte 120 angeordnet sind und erfahren dort zumindest eine Vorverarbeitung insbesondere zur Datenreduktion.

Die Figur 3 zeigt ein Ausführungsbeispiel einer zweiten Beleuchtungseinrichtung 1 mit zugeordneter Maske 6. Die zweite Beleuchtungseinrichtung 1 umfasst eine Lichtquelle 11, beispielsweise in Form ein oder mehrerer LEDs oder Laser, die Licht aussendet. Das durch die Lichtquelle 11 ausgesandte Licht wird in einer Kollimationsoptik 12 zumindest näherungsweise parallelisiert und beleuchtet eine Maske 6, die eine Homogenisierungsoptik darstellt und ein Mikrolinsenarray 60 mit Mikrolinsen 61 umfasst. Das Mikrolinsenarray 60 erzeugt eine Anzahl von Lichtbündeln, die der Anzahl der Mikrolinsen 61 des Mikrolinsenarrays 60 entspricht, und beleuchtet mit diesen Lichtbündeln die Oberfläche 31 des zu identifizierenden Objektes, vgl. Figur 1. Das Mikrolinsenarray 60 stellt dabei ein strukturiertes Beleuchtungsmuster in Form von Rasterpunkten auf der Objektoberfläche 31 bereit.

Für die meisten makroskopischen Anwendungen ist allerdings die Schnittweite des Mikrolinsenarrays 60 zu gering. Es wird deshalb eine zusätzliche, nicht gezeigte Feldlinse oder ein Objektiv eingesetzt. In diesem Fall stellt die Ebene 31 eine Zwischenbildebene dar, die dann auf das Objekt 3 abgebildet wird.

Es kann vorgesehen sein, dass die Mikrolinsen 61 des Mikrolinsenarrays 60 eine räumliche Modulation aufweisen. Diese kann beispielsweise bei einem hexagonalen Raster dadurch erfolgen, dass die Lage der optischen Achse mindestens einer Mikrolinse 61 einer hexagonal angeordneten Gruppe in Umfangsrichtung oder in radialer Richtung bezogen auf den Schwerpunkt der Gruppe verschoben ist. Des Weiteren kann eine räumliche Modulation beispielsweise mittels einer Größenmodulation und/oder einer Farbmodulation realisiert werden. Eine Größenmodulation kann beispielsweise dadurch erfolgen, dass der Durchmesser der Mikrolinsen 61 z.B. durch entsprechende Vergrößerung der lichtundurchlässigen Schicht zwischen den Linsen verändert wird. Durch die unterschiedlichen Durchmesser ergeben sich unterschiedliche Beleuchtungsstärken für die Strahlen, die zusätzlich ausgewertet werden können. Die Größenmodulation der Mikrolinsen 61 führt somit zu einer Helligkeitsmodulation bei den Gitterpunkten. Eine Farbmodulation kann beispielsweise durch unterschiedliche Farbfilter realisiert werden.

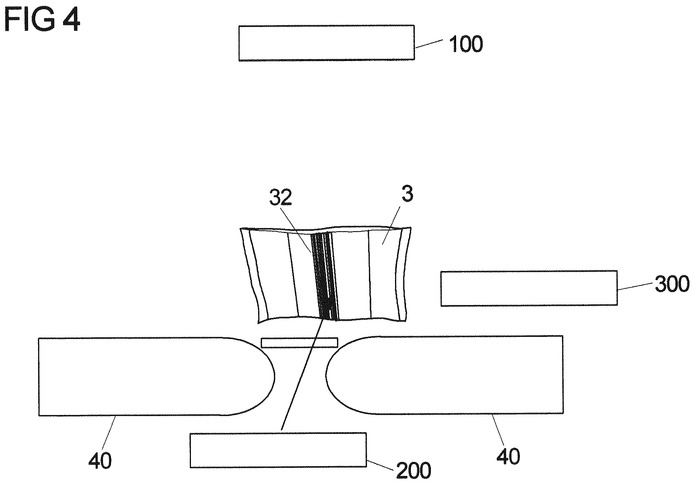

Die Figur 4 zeigt eine Scanvorrichtung zur Erfassung von Waren im Kassenbereich eines Supermarktes. Die Scanvorrichtung umfasst ein Förderband 40, auf dem eine Ware 3 von links nach rechts transportiert wird, sowie mehrere Scaneinrichtungen. So sind ein Draufsicht-Scanner 100 ("Top-Scanner"), der eine Ware 3 von oben scannt, ein Unterseiten-Scanner 200 ("Bottom-Scanner"), der eine Ware 3 von der Unterseite her scannt, sowie mindestens ein seitlicher Scanner 300, der einen seitlichen Scan der Ware 3 durchführt, vorgesehen.

Der Draufsicht-Scanner 100 ist beispielsweise durch ein Modul entsprechend der Figur 2 gebildet und dazu geeignet, Farbinformationen (ggf. auch Grauwertinformationen) und 3D-Informationen zu dem zu identifizierenden Objekt 3 in Echtzeit zu erfassen. Die anderen Scaneinrichtungen 200, 300 sind beispielsweise als Barcode-Scaneinrichtungen ausgebildet. Sie können jedoch alternativ auch zusätzliche Funktionalitäten aufweisen, beispielsweise ein Bild der Ware von der Seite oder von unten aufnehmen, um weitere Informationen zur dreidimensionalen Form der Ware zu erhalten.

Der Unterseiten-Scanner 200 ist dabei wie dargestellt beispielsweise derart positioniert, dass er im Bereich zwischen zwei Förderbändern 40 angeordnet ist und nach oben scannt.

Weiter kann vorgesehen sein, dass die Scanvorrichtung in Form eines Tunnels oder Tors (nicht dargestellt) ausgebildet ist, durch den/das Waren 3 auf dem Förderband 40 befördert werden, wobei der Draufsichtscanner 100 und ein oder mehrere seitliche Scanner 300, sofern vorhanden, an dem Tunnel oder Tor angeordnet ist. Auch können an dem Tunnel oder Tor eine Mehrzahl von Draufsichtscannern 100 angeordnet sein, die jeweils Farbinformationen und 3D-Informationen zu einem zu identifizierenden Objekt 3 in Echtzeit erfassen und die dabei unterschiedliche Raumbereiche erfassen.

Eine zu identifizierende Ware 3 weist in der Regel einen Barcode 32 auf. Sofern dieser erfasst werden kann, ist die Identifizierung der Ware einfach. Sofern der Barcode 32 nicht erfasst werden kann oder die Ware 3 keinen Barcode 32 aufweist, erfolgt eine Identifizierung über den Draufsicht-Scanner 100, indem wie in Bezug auf die Figuren 1 bis 3 erläutert Farb- und/oder Grauwertinformationen und/oder Muster, die mittels der ersten Beleuchtungseinrichtung erfasst werden, und 3D-Informationen, die mittels der zweiten Beleuchtungseinrichtung erfasst werden, bestimmt werden. Die bestimmten Informationen werden mit einer Datenbank abgeglichen, in der die entsprechenden Parameter der einzelnen Waren gespeichert sind, wodurch eine Identifizierung der Ware ermöglicht wird. Beispielsweise kann über die Form (einschließlich der Größe) und über die Farbe bzw. das Farbmuster einer Ware, oder mittels eines weiteren Merkmals (z.B. ein verborgenes Wasserzeichen) eine eindeutige Identifizierung der Ware oder des Merkmals erfolgen.

In einem Vergleichsbeispiel kann vorgesehen sein, dass die ermittelten 3D-Daten und Farb- und/oder Grauwertdaten jeweils für sich ausgewertet und gesondert mit entsprechenden Werten einer Datenbank abgeglichen werden. Beispielsweise wird mittels der 3D-Daten die Form des Objektes bestimmt und erfolgt in Bezug auf diese Form ein Abgleich mit einer Datenbank.

Erfindungsgemäß ist jedoch vorgesehen, dass die zu einem bestimmten Objekt gewonnenen Farb- und/oder Grauwertdaten und 3D-Daten miteinander korreliert werden und auf der Grundlage dieser Korrelation die Farb- und/oder Grauwertdaten dreidimensional erfasst und in ein kartesisches Koordinatensystem übertragen werden. Auch können dabei die dreidimensionalen Farb- und/oder Grauwertdaten mehrerer Kameras, die unterschiedliche Raumbereiche erfassen, zusammengefügt werden, z.B. die dreidimensionalen Farbdaten, die über die Farbkameras 21-24 des Moduls der Figur 2 erfasst werden. Der Abgleich mit einer Datenbank erfolgt dann beispielsweise über die dreidimensional aufgelöste Farb- und/oder Grauwertinformation zu dem zu identifizierenden Objekt.

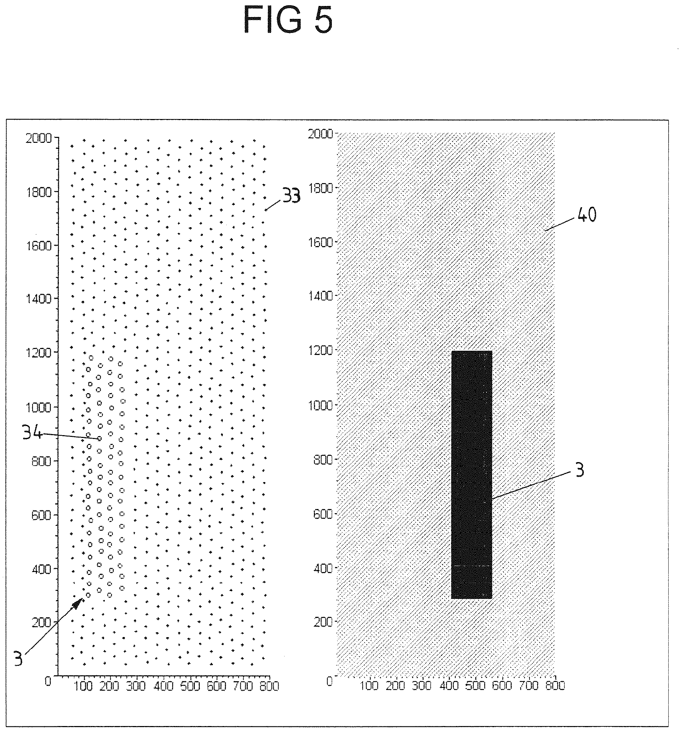

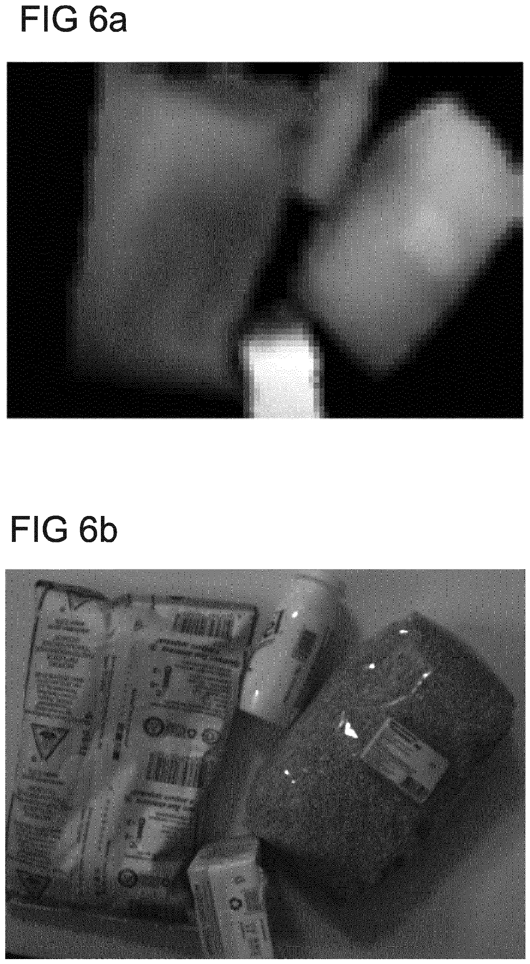

Die Figur 5 und die Figuren 6a-6c stellen beispielhaft Informationen dar, die ein erfindungsgemäßer Draufsicht-Scanner 100 bereitstellt, der beispielsweise durch ein Modul entsprechend der Figur 2 gebildet und der dazu geeignet ist, Farb- und/oder Grauwertinformationen und 3D-Informationen zu einem zu identifizierenden Objekt mittels einer Farbkamera in Echtzeit zu erfassen.

So zeigt die Figur 5 in der linken Seite vorverarbeitete 3D-Daten, die mittels einer Beleuchtungseinrichtung gewonnen sind, die ein zu identifizierendes Objekt mit einem strukturierten Beleuchtungsmuster beleuchtet. Die 3D-Daten werden beispielsweise mit einem Verfahren ermittelt, wie es in der WO 2012/048889 A1 oder in der europäischen Patentanmeldung Nr. 14 170 301.7 "Verfahren und Vorrichtung zur Erfassung der dreidimensionalen Form eines Objektes" vom 28.05.2014 der Anmelderin beschrieben ist.

Das Objekt 3 ist im betrachteten Beispiel ein quaderförmiges Objekt. Die Kreuze 33 entsprechen Punkten auf der Ebene des Transportbands 40. Die Kreise entsprechend Gitterpunkten auf der erhöhten Oberfläche des quaderförmigen Objekts, die durch das strukturierte Beleuchtungsmuster bereitgestellt sind. Diese Objektgitterpunkte werden durch das Objektiv der Farbkamera in die Bildebene der Farbkamera als Bildgitterpunkte 34 abgebildet.

Die Figur 5 zeigt auf der rechten Seite eine Farb- und/oder Graubildaufnahme des Objektes 3, die mittels einer Beleuchtungseinrichtung gewonnen ist, die ein zu identifizierendes Objekt mit Licht des sichtbaren Spektrums und/oder mit Infrarot-Licht homogen beleuchtet. Die Farbbildaufnahme wurde zeitlich nach der 3D Aufnahme durchgeführt.

Da die Farbkamera die Bilder betreffend die 3D-Informationen (linke Seite der Figur 5) und betreffend die Farb- und/oder Grauwertinformationen (rechte Seite der Figur 5) sequentiell aufnimmt, sind die Bilder zueinander aufgrund der Bandgeschwindigkeit des Transportbands 40 verschoben. Das Objekt 3 ist um einen Offset δx = v_{Band} * δt verschoben, wobei δt der Zeitabstand der Aufnahmen und v_{Band} die Transportgeschwindigkeit des Bandes 40 ist. Der Wert v_{Band} ist in der Regel vorbekannt oder wird gemessen. Über den Offset können die beiden Bilder des Objekts 3 kongruent erfasst werden.

So werden die 3D- und die Farb- und/oder Graubildaufnahme zueinander ausgerichtet und verbunden. Dabei werden die Bildgitterpunkte 33, die die Transportbandebene betreffen, allerdings bevorzugt nicht berücksichtigt und vorher ausgeblendet. Die Erkennung der Transportbandebene kann beispielsweise durch Vergleich mit einer angelernten Tabelle oder mit einem Schwellwert erfolgen.

In einer Ausgestaltung erfolgt eine die Transformation der Farb- und/oder Graubilder in ein gemeinsames kartesisches Weltkoordinatensystem unter Verwendung der 3D-Informationen. Damit werden die Farb- bzw. Grauwertinformationen dreidimensional aufgelöst bereitgestellt. Auch kann vorgesehen sein, dass - soweit vorhanden - mehrere Aufnahmen des Objekts, die unterschiedliche Transportpositionen des Objekts auf dem Transportband betreffen, sowie ggf. Aufnahmen benachbarter Kameras, die jeweils nur bestimmte Raumbereiche abdecken, durch Stitching miteinander verbunden werden.

Eine Barcodeerkennung kann konventionell direkt auf den Farbbildern und/oder Graubildern erfolgen.

Das beschriebene Verfahren ist auch geeignet, eine Segmentierung einzelner Objekte durchzuführen, die unmittelbar benachbart auf einem Transportband liegen. Dies wird anhand der Figuren 6a bis 6c veranschaulicht.

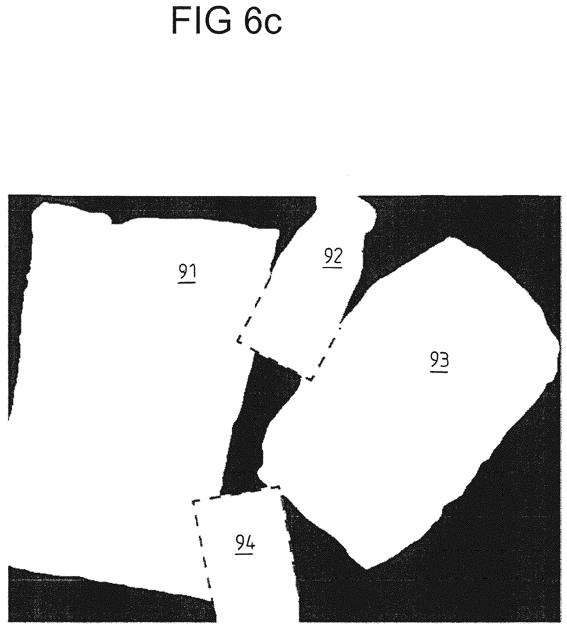

Die Figur 6a zeigt 3D-Daten von vier Objekten, die mittels einer Beleuchtungseinrichtung gewonnen sind, die ein zu identifizierendes Objekt mit einem strukturierten Beleuchtungsmuster beleuchtet. Die z-Koordinate (senkrecht zur Transportbandebene) ist über den Grauwert kodiert. Die Figur 6b zeigt das entsprechende Farbwertbild. Jedem Pixel ist ein bestimmter Farbwert zugeordnet. Das Zusammenfügen der beiden Bilder gemäß der Figur 6c erlaubt eine Segmentierung der vier Objekte 91-94. Diese Segmentierung kann aufgrund des Umstands erfolgen, dass die Objekte an ihren aneinander angrenzenden Flächen eine starke Änderung der z-Koordinate aufweisen, was nach Transformation des Farbbilds in ein gemeinsames kartesisches Weltkoordinatensystem unter Verwendung der 3D-Informationen leicht erfassbar ist.

Eine weitere Anwendung der vorliegenden Erfindung besteht darin, eine identifizierte Ware an einer Selbstbedienungskasse nachzuverfolgen und dabei in einem Ablagebereich, in dem das zuvor zur Feststellung des Kaufpreises identifizierte Objekt hin befördert und abgelegt wurde, erneut zu erfassen und zu identifizieren. Wenn die Identifizierung der Ware im Ablagebereich mit der zuvor erfolgten Identifizierung der Ware übereinstimmt, handelt es sich bei der Ware im Ablagebereich um die bezahlte Ware und liegt kein Missbrauch der Selbstbedienungsfunktion vor.

Die Erfindung beschränkt sich in ihrer Ausgestaltung nicht auf die vorstehend dargestellten Ausführungsbeispiele, die lediglich beispielhaft zu verstehen sind. Beispielsweise ist die Erfindung nicht auf bestimmte Realisierungsformen der ersten und zweiten Beleuchtungsmittel oder der Farbkamera beschränkt. Auch kommt es für die Erfindung z.B. nicht darauf an, auf welche genaue Art und Weise die Daten, die die mindestens eine Farbkamera erfasst, zur Bereitstellung einer Farbinformation und einer 3D-Information ausgewertet werden.

## Patentansprüche

1. Identifizierungsvorrichtung für ein Objekt, die aufweist:
- eine erste Beleuchtungseinrichtung (8, 81, 82), die dazu ausgebildet ist, ein zu identifizierendes Objekt (3) mit Licht des sichtbaren Spektrums und/oder mit Infrarot-Licht homogen zu beleuchten, wobei die erste Beleuchtungseinrichtung (8, 81, 82) LED-Leuchtmittel mit den Farben rot, grün, blau und/oder infrarot umfasst und Licht mit einem Rotanteil, einem Grünanteil und einem Blauanteil und/oder Licht mit einem Infrarotanteil bereitstellt;
- eine zweite Beleuchtungseinrichtung (1), die dazu ausgebildet ist, das zu identifizierende Objekt (3) mit einem strukturierten Beleuchtungsmuster zu beleuchten;
- mindestens eine Farbkamera (2, 21-24), die das mit der ersten Beleuchtungseinrichtung (8, 81, 82) und mit der zweiten Beleuchtungseinrichtung (1) beleuchtete Objekt (3) aufnehmen kann,
- wobei zwischen der Beleuchtungsrichtung der zweiten Beleuchtungseinrichtung (1) und der optischen Achse der Farbkamera (2, 21-24) ein spitzer Winkel besteht, und
- wobei die mindestens eine Farbkamera (2, 21-24) erste Daten bereitstellen kann die das Bild des mit der ersten Beleuchtungseinrichtung (8, 81, 82) beleuchteten Objekts (3) betreffen und zweite Daten bereitstellen kann die das Bild des mit der zweiten Beleuchtungseinrichtung (1) beleuchteten Objekts (3) betreffen, wobei
- die Identifizierungsvorrichtung des Weiteren Identifizierungsmittel (7) aufweist, die dazu ausgebildet sind, die ersten Daten dahingehend auszuwerten, dass eine Mustererkennung und/oder eine Farberkennung und/oder die Erkennung eines Kontrastverhältnisses zumindest eines Teilbereichs des Objekts erfolgt, und die zweiten Daten dahingehend auszuwerten, dass mindestens ein Parameter der dreidimensionalen Form des Objekts erfasst wird; und wobei
- die Identifizierungsvorrichtung dazu ausgebildet ist, zu einem zu identifizierenden Objekt die ersten Daten und die zweiten Daten sequentiell zu erfassen, aus den ersten Daten gewonnene Farb- und/oder Kontrastverhältnisdaten und aus den zweiten Daten gewonnene 3D-Daten zu dem Objekt miteinander zu korrelieren und auf der Grundlage dieser Korrelation die Farb- und/oder Kontrastverhältnisdaten in ein kartesisches Koordinatensystem zu übertragen,
**dadurch gekennzeichnet, dass** die Identifizierungsvorrichtung dazu ausgebildet ist, das Objekt wenigstens teilweise mittels Abgleichen der korrelierten Farb- und/oder Kontrastverhältnisdaten und 3D-Daten mit einer Datenbank über dreidimensional aufgelöste Farb- und/oder Kontrastverhältnisinformation zu dem Objekt zu identifizieren.

2. Identifizierungsvorrichtung nach Anspruch 1, **dadurch gekennzeichnet, dass** die zweite Beleuchtungseinrichtung (1) ein Beleuchtungsmuster aus grünem Licht aussendet.

3. Identifizierungsvorrichtung nach einem der vorangehenden Ansprüche, **dadurch gekennzeichnet, dass** die erste Beleuchtungseinrichtung (8, 81, 82) und die zweite Beleuchtungseinrichtung (1) derart gesteuert sind, dass sie ein zu identifizierendes Objekt (3) sequenziell mit Licht beleuchten.

4. Identifizierungsvorrichtung nach Anspruch 3, **dadurch gekennzeichnet, dass** die mindestens eine Farbkamera (2, 21-24) dazu ausgebildet ist, von einem Objekt (3) mindestens zwei Aufnahmen zu machen, während es innerhalb einer Sequenz mit der ersten Beleuchtungseinrichtung (8, 81, 82) mit gleichen und/oder unterschiedlichen Lichtzusammensetzungen beleuchtet wird.

5. Identifizierungsvorrichtung nach einem der vorangehenden Ansprüche, **dadurch gekennzeichnet, dass** die mindestens eine Farbkamera (2, 21-24) ein Objektiv mit einem telezentrischen Strahlengang aufweist.

6. Identifizierungsvorrichtung nach einem der vorangehenden Ansprüche, **dadurch gekennzeichnet, dass** die zweite Beleuchtungseinrichtung (1) dazu ausgebildet ist, als strukturiertes Beleuchtungsmuster eine Punktwolke bereitzustellen, mit der das Objekt beleuchtet wird.

7. Identifizierungsvorrichtung nach einem der vorangehenden Ansprüche, **dadurch gekennzeichnet, dass** die Identifizierungsmittel (7) dazu ausgebildet sind, die zweiten Daten mittels einer Korrespondenzanalyse im Hinblick auf mindestens einen Parameter der dreidimensionalen Form auszuwerten, wobei die Korrespondenzanalyse Objektgitterpunkte auf der Oberfläche des Objektes Bildgitterpunkten in der Bildebene der Farbkamera zuordnet.

8. Identifizierungsvorrichtung nach einem der vorangehenden Ansprüche, **dadurch gekennzeichnet, dass** die Vorrichtung im Falle eines bewegten Objektes dazu ausgebildet ist, die Korrelation der ersten Daten und der zweiten Daten unter Berücksichtigung der Bewegungsrichtung und Bewegungsgeschwindigkeit des bewegten Objektes vorzunehmen.

9. Identifizierungsvorrichtung nach einem der vorangehenden Ansprüche, **dadurch gekennzeichnet, dass** die erste Beleuchtungseinrichtung (81, 82), die zweite Beleuchtungseinrichtung (1) und die mindestens eine Farbkamera (21-24) in einem gemeinsamen Modul (100) mit einem Modulgehäuse (110) angeordnet sind.

10. Identifizierungsvorrichtung nach Anspruch 9, **dadurch gekennzeichnet, dass** die Identifizierungsmittel (7) ebenfalls in das Modul (100) integriert sind, wobei die Identifizierungsmittel (7) zumindest eine Datenreduktion vornehmen.

11. Identifizierungsvorrichtung nach einem der vorangehenden Ansprüche, **dadurch gekennzeichnet, dass** die Vorrichtung mindestens eine Mehrzahl zusammengehöriger Farbkameras (21, 22; 23, 24) aufweist, wobei eine erste Farbkamera der Mehrzahl dazu ausgebildet ist, ein Objekt oder einen Teil eines Objekts in einem ersten Tiefenschärfenbereich scharf abzubilden und mindestens eine zweite Farbkamera der Mehrzahl dazu ausgebildet ist, ein Objekt oder einen Teil eines Objekts in mindestens einem weiteren Tiefenschärfenbereich scharf abzubilden, der sich an den ersten Tiefenschärfenbereich anschließt.

12. Identifizierungsvorrichtung nach einem der vorangehenden Ansprüche, **dadurch gekennzeichnet, dass** die Vorrichtung dazu ausgebildet ist, als Objekte (3) Waren zu erkennen, die auf einer Transportvorrichtung im Kassenbereich eines Supermarktes oder auf einer Transportvorrichtung eines Rücknahmeautomaten befördert werden, oder als Objekte Münzen, Flaschen, Dosen, Batterien sowie sonstige entsorgungs- oder recyclingfähige Materialien zu erkennen.

13. Scanvorrichtung zur Erfassung von Waren im Kassenbereich eines Supermarktes, wobei die Scanvorrichtung in Form eines Tunnels oder eines Tors ausgebildet ist, durch den/das Waren auf einer Transporteinrichtung befördert werden, wobei die Scanvorrichtung mindestens eine Identifizierungsvorrichtung mit den Merkmalen des Anspruchs 1 aufweist.

## Claims

1. Identification apparatus for an object, having:
- a first illumination device (8, 81, 82), which is configured to homogeneously illuminate an object (3) to be identified with light of the visible spectrum and/or with infrared light, wherein the first illumination device (8, 81, 82) comprises LED light-emitting means in the colours red, green, blue and/or infrared and provides light having a red component, a green component and a blue component and/or light having an infrared component;
- a second illumination device (1), which is configured to illuminate the object (3) to be identified with a structured illumination pattern;
- at least one colour camera (2, 21-24), which can record the object (3) illuminated with the first illumination device (8, 81, 82) and with the second illumination device (1),
- wherein an acute angle exists between the illumination direction of the second illumination device (1) and the optical axis of the colour camera (2, 21-24), and
- wherein the at least one colour camera (2, 21-24) can provide first data that relate to the image of the object (3) illuminated with the first illumination device (8, 81, 82) and can provide second data that relate to the image of the object (3) illuminated with the second illumination device (1), wherein
- the identification apparatus furthermore has identification means (7), which are configured to evaluate the first data to the effect that pattern recognition and/or colour recognition and/or recognition of a contrast ratio of at least one partial region of the object takes place, and to evaluate the second data to the effect that at least one parameter of the three-dimensional shape of the object is captured; and wherein
- the identification apparatus is configured to sequentially capture the first data and the second data relating to an object to be identified, to correlate colour and/or contrast ratio data obtained from the first data and 3D data relating to the object obtained from the second data to one another and to transfer the colour and/or contrast ratio data into a Cartesian coordinate system on the basis of said correlation,
**characterized in that** the identification apparatus is configured to identify the object at least partially by means of comparing the correlated colour and/or contrast ratio data and 3D data with a database containing three-dimensionally resolved colour and/or contrast ratio information relating to the object.

2. Identification apparatus according to Claim 1, **characterized in that** the second illumination device (1) emits an illumination pattern of green light.

3. Identification apparatus according to either of the preceding claims, **characterized in that** the first illumination device (8, 81, 82) and the second illumination device (1) are controlled such that they sequentially illuminate an object (3) to be identified with light.

4. Identification apparatus according to Claim 3, **characterized in that** the at least one colour camera (2, 21-24) is configured to take at least two recordings of an object (3), while it is illuminated within a sequence with the first illumination device (8, 81, 82) with identical and/or different light compositions.

5. Identification apparatus according to one of the preceding claims, **characterized in that** the at least one colour camera (2, 21-24) has an objective lens having a telecentric beam path.

6. Identification apparatus according to one of the preceding claims, **characterized in that** the second illumination device (1) is configured to provide, as the structured illumination pattern, a point cloud with which the object is illuminated.

7. Identification apparatus according to one of the preceding claims, **characterized in that** the identification means (7) are configured to evaluate the second data by means of a correspondence analysis with respect to at least one parameter of the three-dimensional shape, wherein the correspondence analysis assigns object grid points on the surface of the object to image grid points in the image plane of the colour camera.

8. Identification apparatus according to one of the preceding claims, **characterized in that** the apparatus in the case of a moving object is configured to effect the correlation of the first data and the second data by taking into consideration the movement direction and movement speed of the moving object.

9. Identification apparatus according to one of the preceding claims, **characterized in that** the first illumination device (81, 82), the second illumination device (1) and the at least one colour camera (21-24) are arranged in a common module (100) having a module housing (110) .

10. Identification apparatus according to Claim 9, **characterized in that** the identification means (7) are likewise integrated into the module (100), wherein the identification means (7) effect at least one data reduction.

11. Identification apparatus according to one of the preceding claims, **characterized in that** the apparatus has at least one plurality of associated colour cameras (21, 22; 23, 24), wherein a first colour camera of the plurality is configured to sharply image an object or a part of an object in a first depth of field region and at least one second colour camera of the plurality is configured to sharply image an object or a part of an object in at least one further depth of field region that adjoins the first depth of field region.

12. Identification apparatus according to one of the preceding claims, **characterized in that** the apparatus is configured to recognize objects (3) as goods that are conveyed on a transport apparatus in the cash register region of a supermarket or on a transport apparatus of a reverse vending machine, or to recognize objects as coins, bottles, cans, batteries or other disposable or recyclable materials.

13. Scanning apparatus for capturing goods in the cash register region of a supermarket, wherein the scanning apparatus is designed in the form of a tunnel or a portal through which goods are conveyed on a transport device, wherein the scanning apparatus has at least one identification apparatus having the features of Claim 1.

## Revendications

1. Dispositif d'identification pour un objet, présentant :
- un premier dispositif d'éclairage (8, 81, 82), qui est réalisé pour éclairer de manière homogène un objet à identifier (3) par de la lumière du spectre visible et/ou par de la lumière infrarouge, le premier dispositif d'éclairage (8, 81, 82) comprenant des moyens lumineux DEL aux couleurs rouge, vert, bleu et/ou infrarouge et fournissant de la lumière ayant une composante de rouge, une composante de vert et une composante de bleu et/ou de la lumière ayant une composante d'infrarouge ;
- un deuxième dispositif d'éclairage (1) qui est réalisé pour éclairer l'objet à identifier (3) par un motif d'éclairage structuré ;
- au moins une caméra couleur (2, 21 à 24) qui peut photographier l'objet (3) éclairé par le premier dispositif d'éclairage (8, 81, 82) et par le deuxième dispositif d'éclairage (1),
- un angle aigu existant entre la direction d'éclairage du deuxième dispositif d'éclairage (1) et l'axe optique de la caméra couleur (2, 21 à 24), et
- ladite au moins une caméra couleur (2, 21 à 24) pouvant fournir des premières données qui concernent l'image de l'objet (3) éclairé par le premier dispositif d'éclairage (8, 81, 82) et des deuxièmes données qui concernent l'image de l'objet (3) éclairé par le deuxième dispositif d'éclairage (1), dans lequel
- le dispositif d'identification présente en outre des moyens d'identification (7) qui sont réalisés pour évaluer les premières données de manière à ce qu'une reconnaissance de motif et/ou une reconnaissance des couleurs et/ou la reconnaissance d'un rapport de contraste au moins d'une zone partielle de l'objet soient effectuées, et pour évaluer les deuxièmes données de manière à ce qu'au moins un paramètre de la forme tridimensionnelle de l'objet soit détecté ; et dans lequel
- le dispositif d'identification est réalisé pour détecter de manière séquentielle les premières données et les deuxièmes données pour un objet à identifier, pour corréler entre elles des données de couleur et/ou de rapport de contraste obtenues à partir des premières données et des données 3D obtenues à partir des deuxièmes données pour l'objet, et pour transposer sur la base de cette corrélation les données de couleur et/ou de rapport de contraste dans un système de coordonnées cartésiennes,
**caractérisé en ce que** le dispositif d'identification est réalisé pour identifier l'objet au moins en partie au moyen d'un rapprochement des données de couleur et/ou de rapport de contraste et des données 3D corrélées avec une base de données concernant des informations de couleur et/ou de rapport de contraste à résolution tridimensionnelle pour l'objet.

2. Dispositif d'identification selon la revendication 1, **caractérisé en ce que** le deuxième dispositif d'éclairage (1) émet un motif d'éclairage de lumière verte.

3. Dispositif d'identification selon l'une quelconque des revendications précédentes, **caractérisé en ce que** le premier dispositif d'éclairage (8, 81, 82) et le deuxième dispositif d'éclairage (1) sont commandés de telle sorte qu'ils éclairent de manière séquentielle un objet (3) à identifier par de la lumière.

4. Dispositif d'identification selon la revendication 3, **caractérisé en ce que** ladite au moins une caméra couleur (2, 21 à 24) est réalisée pour effectuer au moins deux prises de vue d'un objet (3) pendant qu'il est éclairé à l'intérieur d'une séquence par le premier dispositif d'éclairage (8, 81, 82) avec des compositions de lumière identiques et/ou différentes.

5. Dispositif d'identification selon l'une quelconque des revendications précédentes, **caractérisé en ce que** ladite au moins une caméra couleur (2, 21 à 24) présente un objectif doté d'une trajectoire des rayons télécentrique.

6. Dispositif d'identification selon l'une quelconque des revendications précédentes, **caractérisé en ce que** le deuxième dispositif d'éclairage (1) est réalisé pour fournir comme motif d'éclairage structuré un nuage de points avec lequel l'objet est éclairé.

7. Dispositif d'identification selon l'une quelconque des revendications précédentes, **caractérisé en ce que** les moyens d'identification (7) sont réalisés pour évaluer les deuxièmes données au moyen d'une analyse de correspondance quant à au moins un paramètre de la forme tridimensionnelle, l'analyse de correspondance attribuant des points de grille d'objet à la surface de l'objet à des points de grille d'image dans le plan image de la caméra couleur.

8. Dispositif d'identification selon l'une quelconque des revendications précédentes, **caractérisé en ce que** dans le cas d'un objet déplacé, le dispositif est réalisé pour procéder à la corrélation des premières données et des deuxièmes données en tenant compte de la direction de déplacement et de la vitesse de déplacement de l'objet déplacé.

9. Dispositif d'identification selon l'une quelconque des revendications précédentes, **caractérisé en ce que** le premier dispositif d'éclairage (81, 82), le deuxième dispositif d'éclairage (1) et ladite au moins une caméra couleur (21 à 24) sont disposés dans un module commun (100) doté d'un carter de module (110).

10. Dispositif d'identification selon la revendication 9, **caractérisé en ce que** les moyens d'identification (7) sont également intégrés dans le module (100), les moyens d'identification (7) procédant au moins à une réduction de données.

11. Dispositif d'identification selon l'une quelconque des revendications précédentes, **caractérisé en ce que** le dispositif présente au moins une pluralité de caméras couleur (21, 22 ; 23, 24) associées, une première caméra couleur de la pluralité étant réalisée pour produire une image nette d'un objet ou d'une partie d'un objet dans une première plage de profondeur de champ, et au moins une deuxième caméra couleur de la pluralité étant réalisée pour produire une image nette dans au moins une autre plage de profondeur de champ qui est consécutive à la première plage de profondeur de champ.

12. Dispositif d'identification selon l'une quelconque des revendications précédentes, **caractérisé en ce que** le dispositif est réalisé pour reconnaître comme objets (3) des marchandises qui sont transportées sur un dispositif de transport au niveau des caisses d'un supermarché ou sur un dispositif de transport d'une machine de déconsigne automatique, ou pour reconnaître comme objets des pièces de monnaie, des bouteilles, des cannettes, des batteries ainsi que d'autres matériaux susceptibles d'être jetés ou recyclés.

13. Dispositif de balayage pour détecter des marchandises au niveau des caisses d'un supermarché, le dispositif de balayage étant réalisé sous la forme d'un tunnel ou d'un portique à travers lequel des marchandises sont transportées sur un dispositif de transport, le dispositif de balayage présentant au moins un dispositif d'identification ayant les particularités de la revendication 1.
